# EUROPEAN PATENT APPLICATION

(11) **EP 3 045 041 A1**
(43) Date of publication of application: **20.07.2016**
(21) Application number: 15201606.9
(22) Date of filing: 21.12.2015
(51) Int. Cl.: A01K 87/06, A01K 89/00, A01K 97/01

(54) **ICE FISHING ROD**

(30) Priority: 15.01.2015 FI 20154008 U
(71) Applicant: Rapala VMC OYJ, 17200 Vääksy (FI)
(72) Inventor: VERHO, Tapio, 00610 Helsinki (FI); MUSTONEN, Anssi, 41800 Korpilahti (FI); LEHTONEN, Samuel, 41800 Korpilahti (FI)
(74) Representative: IPR Partners Ltd

(57) **Abstract**

The invention relates to an ice fishing rod and, in particular, the invention relates to a spool solution for an ice fishing rod. The ice fishing rod (100) comprises a space (116) for connecting a separate fishing line spool (106) to the ice fishing rod. A pin (108) can be provided in said space (116), on which the separate fishing line spool (106) can be mounted. The ice fishing rod may also comprise a crank handle (112), the crank handle (112) being removably mountable on said pin (108) in order to fasten the separate fishing line spool (106) into said space (116)/to release it out of said space (116). The present invention may allow a fishing line to be easily replaced with a new one, also in difficult circumstances.

## Description

### TECHNICAL FIELD

The invention relates to an ice fishing rod and, in particular, the invention relates to a spool solution for an ice fishing rod.

### BACKGROUND OF THE INVENTION

Different kinds of fishing lines are used in conjunction with ice fishing rods, just like many other fishing rods, depending on the properties of the fishing line, such as its material, thickness, shape, color and durability. The users usually choose the fishing line to suit their needs, the circumstances and their preferences.

An ice fishing rod is provided with a fishing line in the same way as a spin fishing rod, for example, i.e. a free end of the fishing line is attached to the reel of the fishing rod, in some way, such as by tying the fishing line to/round the reel. Then, a desired length of the fishing line is wound onto the reel of the ice fishing rod by means of a crank handle mounted in the reel. The fishing line is threaded through a fishing line guide and a device, such a lock snap, or some other similar device, is tied to the free end of the fishing line in order to fasten a jig, lure and/or bait to the fishing line.

However, when it is cold or chilly, changing a fishing line can be difficult and uncomfortable because it can be hard to tie knots with fingers numb with cold, and, in addition, winding a fishing line off a fishing line spool and onto reel of the fishing rod is time-consuming and requires accuracy in order to prevent the fishing line from getting tangled during the winding or afterwards. This is why ice anglers often carry more than one ice fishing rod with them, equipped with fishing lines having properties probable to be useful on that occasion. Another reason for why ice anglers usually carry extra ice fishing rods with them is that they do not want to lose the opportunity to get a good haul, when the fish are biting well, for example, by wasting time replacing the fishing line with a new one.

However, carrying more than one ice fishing rod can be difficult and requires that extra equipment is purchased, thus causing in an increase in costs, of course. Besides, because it is not easy to know what the circumstances are going to be, ice anglers may take ice fishing rods equipped with the wrong type of fishing lines with them.

### SUMMARY OF THE INVENTION

The present invention aims at providing a solution alleviating the above-mentioned drawbacks. In particular, the invention aims at solving how to quickly and easily replace the fishing line of an ice fishing rod with a new one.

The objective of the invention is achieved by the features defined in the independent claim 1. The ice fishing rod according to the invention is characterized by what is set forth in the characterizing part of claim 1.

The utility of the ice fishing rod according to the invention arises from a number of facts. The ice fishing rod of the invention can be equipped with a separate spool, allowing any fishing line spools available on the market to be directly connected to the body structure of the ice fishing rod. This makes it possible for the user to choose a ready-wound fishing line with desired properties and to mount it on the ice fishing rod without any complicated fastening or winding operations.

The solution according to the present invention may allow a fishing line to be easily replaced with a new one, also in difficult circumstances, thus eliminating the need of the user to carry more than one ice fishing rod with him for different fishing lines and/or in preparation for that the fishing line breaks/gets tangled, but an ice fishing rod according to the invention and separate fishing line spools may be the only equipment that he needs.

That is, the solution according to the present invention may also allow at least some parts of an ice fishing rod to be easily replaced with new ones. Especially the crank handle used for mounting the spool and the fastener fastening the crank handle to the pin can be easily replaced, if desired.

In this application, the term "a top view" refers, in normal use, to a position of an ice fishing rod in which one side of the ice fishing rod faces down while the other side thereof faces up, the ice fishing being viewed from above the side facing up.

The dependent claims also describe preferred embodiments of the invention.

### BRIEF DESCRIPTION OF THE DRAWINGS

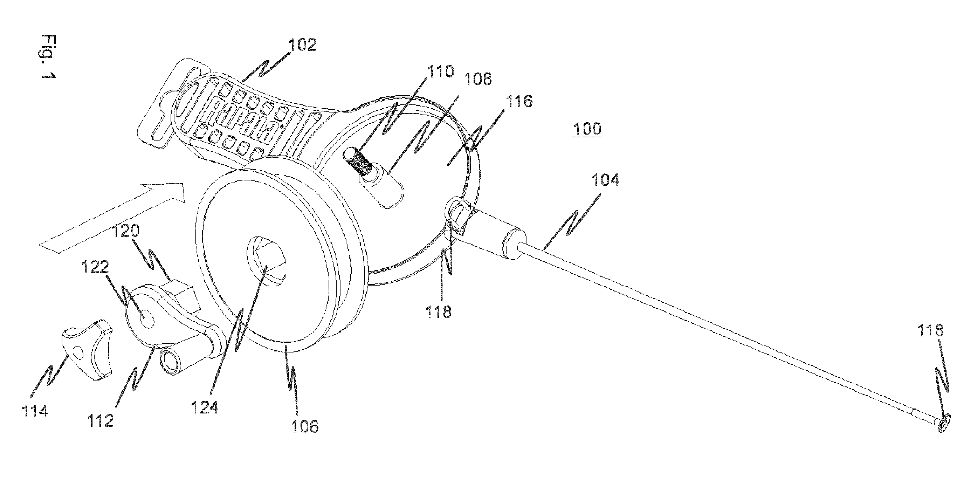

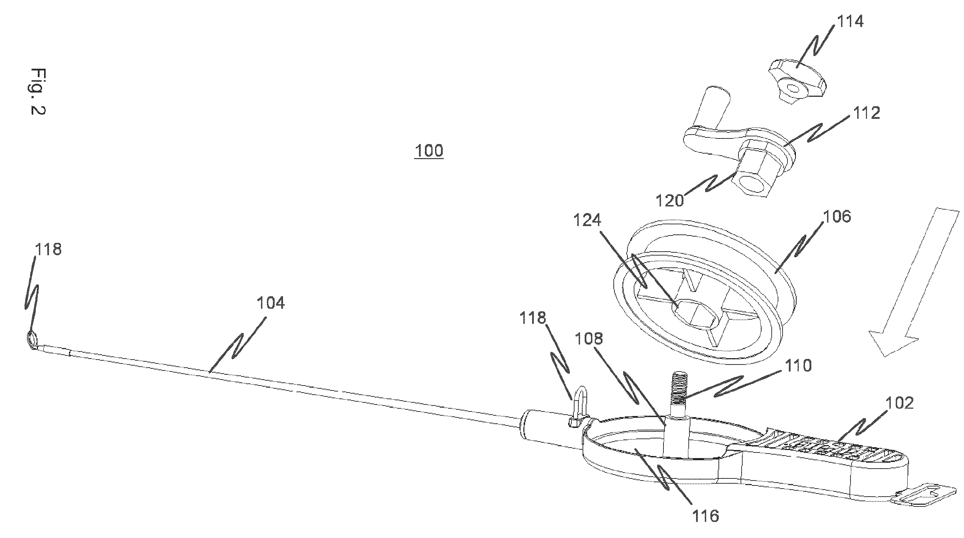

In the following, preferred embodiments of the invention will be explained in more detail with reference to the accompanying figures wherein
Figures 1 and 2 are exploded views of an ice fishing rod according to an embodiment of the present invention and a separate spool connectable thereto.

### MORE DETAILED DESCRIPTION OF THE DRAWINGS

Figures 1 and 2 are exploded views of an ice fishing rod according to an embodiment of the present invention and of a separate fishing line spool. The ice fishing rod 100 according to the present embodiment comprises conventional ice fishing rod parts, such as a handle 102 for holding the ice fishing rod as well as a rod portion 104 with appropriate fishing line guides 118. In an ice fishing rod, the fishing line spool is usually located in the area between the handle and the rod portion. It is obvious to a person skilled in the art that the conventional parts of the ice fishing rod can also be implemented in some other way, or, that they can be shaped dissimilarly from the ones shown in Figures 1 and 2.

In the solution according to the present invention, between the handle 102 and the rod portion 104, a space 116 is provided for a separate fishing line spool 106. In a top view, the space 116 is preferably round, corresponding to the top-view shape of a typical fishing line spool. However, it is possible to choose some other shape for the space 116, provided that the fishing line spool can be received into the space and the fishing line spool can rotate in the space without hindrance.

A pin 108 is provided in the space 116, on which the separate fishing line spool 106 can be mounted at an opening 124 made in the middle of the fishing line spool 106. The pin 108 is preferably located in the middle of the space 116, which is round in a top view, to extend substantially vertically upwards from the space 116. It is preferable that the pin 108 is substantially round in shape in a top view to allow the fishing line spool to rotate around the pin without hindrance. The height of the pin is chosen to at least correspond to the thickness of the separate fishing line spool as well as to allow the fishing line spool and the crank handle to be mounted on the pin.

In an embodiment, the ice fishing rod also comprises a crank handle 112 that is removably mountable on the pin 108 in order to fasten the separate fishing line spool 106 into the space 116. In an embodiment, the portion 120 of the crank handle 112 intended to be joined to the pin 108 embodies a shape that allows the fishing line spool 106 to be rotated around the pin by means of the crank handle 112. For the rotation of the fishing line spool, it is preferable to provide the crank shaft with a shape matching the shape of the center part of the fishing line spool. In the embodiment shown in Figure 1, the portion 120 of the crank handle 112 intended to be joined to the pin 108 is hexagonal in shape, but it can also be pentagonal in shape, or star-shaped, for example. It is understood by a person skilled in the art that shape fitting into the center opening 124 of the fishing line spool can also be chosen to be some other shape dissimilar from the shape of the center part of the fishing line, provided that the shape is chosen to allow the fishing line spool to be rotated by means of the crank shaft.

In an embodiment, threads 110 are provided on the pin 108, at least on a portion thereof, downwards from the end of the pin. This embodiment is intended to allow the crank handle 112 and the fishing line spool 106 to be locked in place on the pin by fasteners. In the present embodiment, the pin 108 is made long enough to extend through an opening 122 made in the crank handle 112. The fasteners shown in Figures 1 and 2 comprise a nut 114 to be screwed, on the upper side of the crank shaft 112, onto the threads 110 of the pin in order to mount the crank shaft 112 and, consequently, the fishing line spool 106 in place in the space 116.

In another embodiment, the crank shaft 112 is adapted to be locked to the pin 108 by using a snap-fit, the crank handle and the pin being provided with snap-fit means to fit the crank handle onto the pin and to release it from the pin.

The diameter of the space 116 in the ice fishing rod, the thickness and height of the pin 108 as well as the portion 120 of the crank handle to be joined to the pin are chosen to allow desired fishing line spools to be fitted to the ice fishing rod. The diameter of the space 116 can also be chosen to allow fishing line spools with different diameters to be used, to a limited extent, in conjunction with ice fishing rod. Likewise, different kinds of crank handles can be manufactured to shape the pin-joining portion 120 of the crank handle to match the opening of different fishing line spools. This allows one ice fishing rod to be used with different types and/or different brands of fishing line spools.

The scope of the invention is defined by the following claims. However, it is obvious to a person skilled in the art that the details of the different features of the invention may vary to some extent within the inventive idea, depending on each embodiment of the invention.

## Claims

1. An ice fishing rod, **characterized in that** the ice fishing rod (100) comprises a space (116) for connecting a separate fishing line spool (106) to the ice fishing rod (100).

2. An ice fishing rod as defined in claim 1, **characterized in that** the ice fishing rod (100) comprises a pin (108) provided in said space (116), on which the separate fishing line spool (106) can be mounted.

3. An ice fishing rod as defined in claim 2, **characterized in that** the ice fishing rod (100) also comprises a crank handle (112), the crank handle (112) being removably mountable on said pin (108) in order to fasten the separate fishing line spool (106) into said space (116)/to release it out of said space (116).

4. An ice fishing rod as defined in claim 3, **characterized in that** the crank handle also is provided with a shape corresponding to the shape of the center part of fishing line spool in order to rotate the fishing line spool by means of the crank handle.

5. An ice fishing rod as defined in claim 3 or 4, **characterized in that** the ice fishing rod (100) also comprises means for fastening said crank handle (112) to the pin.
